# EUROPÄISCHE PATENTSCHRIFT

(11) **EP 1 897 829 B1**
(45) Veröffentlichungstag und Bekanntmachung des Hinweises auf die Patenterteilung: **30.07.2008**
(21) Anmeldenummer: 06018814.1
(22) Anmeldetag: 08.09.2006
(51) Int. Cl.: B65G 65/32

(54) **Verfahren zum Befüllen von Grossraumlagersilos mit einem fluidisierbaren Material und Anordnung dafür**
Method and system for filling storage silos with a fluidisable bulk material
Méthode et système pour le remplissage de silos de stockage avec des matières en vrac fluidisées

(43) Veröffentlichungstag der Anmeldung: 12.03.2008
(73) Patentinhaber: IBAU HAMBURG Ingenieurgesellschaft Industriebau mbH, 20459 Hamburg (DE)
(72) Erfinder: Niedworok, Carsten, 25436 Moorrege (DE)
(74) Vertreter: Fleck, Thomas

(56) Entgegenhaltungen:
- DE-A1- 3 520 498
- DE-T2- 60 014 050

## Beschreibung

Die vorliegende Erfindung betrifft ein Verfahren zum Befüllen von Großraumlagersilos mit einem fluidisierbaren Material nach dem Oberbegriff des Anspruchs 1 sowie eine Anordnung zum Befüllen desselben nach dem Oberbegriff des Anspruchs 7.

Bei der Füllung von Großraumsilos, insbesondere mit feinkörnigen, leicht fluidisierbaren Schüttgütern im Bereich kleiner 200 µm wird beobachtet, dass sich oberhalb der Siloschüttung Luftströmungen und Toträume einstellen, die Entmischungserscheinungen nach der Teilchengröße hervorrufen. Das feine Material wird bevorzugt in den wandnahen Siloaußensektionen bzw. in den Toträumen der Luftströmung abgelagert, das weniger feine Material im Zentrum des Silos. Das Phänomen der Luftstrom-Entmischung wird insbesondere bei Lagersilos für Tonerde (Aluminiumoxid) festgestellt, die Silodurchmesser von über 30 m aufweisen und wo bei Feuchten < 1% das Material sehr leicht fließend und fluidisierbar ist und sich das Teilchengrößenspektrum von etwa 1µm bis 200 µm bewegt. Dabei ist beispielsweise ein Anteil von etwa 5-10% Feingut mit Teilchengrößen < 45 µm durchschnittlich vorhanden. Im Silo ergibt sich eine Verteilung des Feingutes mit abnehmender Konzentration von der Außensektion an der Wand zu der Innensektion im Zentrum. Es kann in ungünstigen Fällen vorkommen, dass einzelne Siloaußensektionen eine Anreicherung bis zu 70% Feingut aufweisen. Trägt man das entmischte Material aus, kommt es zu erheblichen Problemen bei der anschließenden Weiterverarbeitung im Aluminiumherstellungsprozess.

Um die Entmischungswirkungen gering zu halten, wurde bisher eine Reihe von Verfahren entwickelt. In einer Veröffentlichung von Gisle G. Enstad im POSTEC-Newsletter Nr. 16, Dez. 1997, pp. 27-30 wird ein zentrales Füllrohr zur Befüllung vorgeschlagen, welches von der Silodecke zum Siloboden verläuft und durch mehrere Öffnungsklappen eine Befüllung von unten nach oben ermöglicht. Nach der DE 600 14050 T2 werden mehrere Verteilerrohre eingesetzt, die im Siloinnern entlang der Wand verlaufen. Das Material wird vor dem Eintritt in das Silo über eine Entlüftungsbox und gfs. einem Materialverteiler weitgehend entlüftet. Das Silo bzw. der Großraumbehälter besitzen Einlässe für Umgebungsluft und Auslässe für die Luftabführung. Insofern kann mit dieser Einrichtung der Luftstrom-Entmischung bestenfalls entgegengewirkt, wenn überhaupt, sie aber nicht verhindert werden, weil das Material während der Befüllung die Luft im Silo nur verdrängt und sich Toträume für die Luftströmung ergeben. Zum anderen stellen die Rohre auch signifikante Einbauten in das Silo dar, die zwar robuster als die erstgenannte Veröffentlichung, aber großen Materialkräften ausgesetzt sind und deshalb abreißen können sowie beim Entleeren durch die so genannte Zeitverfestigung des Materials zum Verstopfen neigen. Dem Ausfall von Verteilerrohren wird in der genannten DE durch Abzweigungen bzw. Bypassleitungen versucht, Rechnung zu tragen, jedoch kann auch in jeder Bypassleitung eine Verstopfung auftreten.

Der vorliegenden Erfindung liegt die Aufgabe zugrunde, die obigen Probleme, insbesondere die Toträume für die Luftströmung in den wandnahen Siloaußensektionen innerhalb des Großraumsilos vollständig zu vermeiden, so dass Entmischungen sicher vermieden werden können. Auch sollte eine entsprechende Anordnung geschaffen werden, die einfach in ihrem Aufbau und ihrer Wirkungsweise sowie wirtschaftlich herzustellen ist. Diese Aufgaben werden erfindungsgemäß durch das im Anspruch 1 gekennzeichnete Verfahren bzw. die Anordnung nach Anspruch 7 gelöst. Gleichzeitig wird das Silo so gesteuert befüllt, dass das Feingut verstärkt in den Innensektionen, während das Grobgut verstärkt in den Außensektionen abgelagert wird und somit einer natürlichen Verteilung aufgrund der Luftströmung im Silo entgegengewirkt. Die Art der Verteilung kann durch die erfindungsgemäße gezielte Luftabsaugung im Silo beeinflusst werden. Die Erfindung bildet eine Anordnung, die nicht im Material vorhergesehen und keinen Silokräften ausgesetzt ist und zu keinen Störungen beim Silobetrieb führt.

Die Anordnung dient zum Befüllen von Großraumsilos mit Materialien, die fluidisierbar sind und zu Entmischungserscheinungen infolge der Luftströmungen in Silos neigen. Im Folgenden wird die Erfindung anhand von Zeichnungen näher erläutert, die dem besseren Verständnis der Erfindung dienen soll, auf das dieselbe jedoch nicht beschränkt ist.

Es zeigen:
- Fig. 1: eine schematische Querschnittansicht eines Großraumsilos mit den Befüll- und Absaugeinrichtungen,
- Fig. 2: eine Draufsicht auf die Silodecke mit den Befülleinrichtungen,
- Fig. 3: einen Schnitt im Silo, oberhalb der Ringleitung zur Luftabsaugung,
- Fig. 4: einen Schnitt durch das Profil der Luftabsaugeinrichtung,
- Fig. 5: einen Schnitt im Silo mit Darstellung unterschiedlicher Füllstände und Material- und Luftströmungen

- Fig. 6: die Absaugung an den Auslaufköpfen als Variante zur Ringleitung

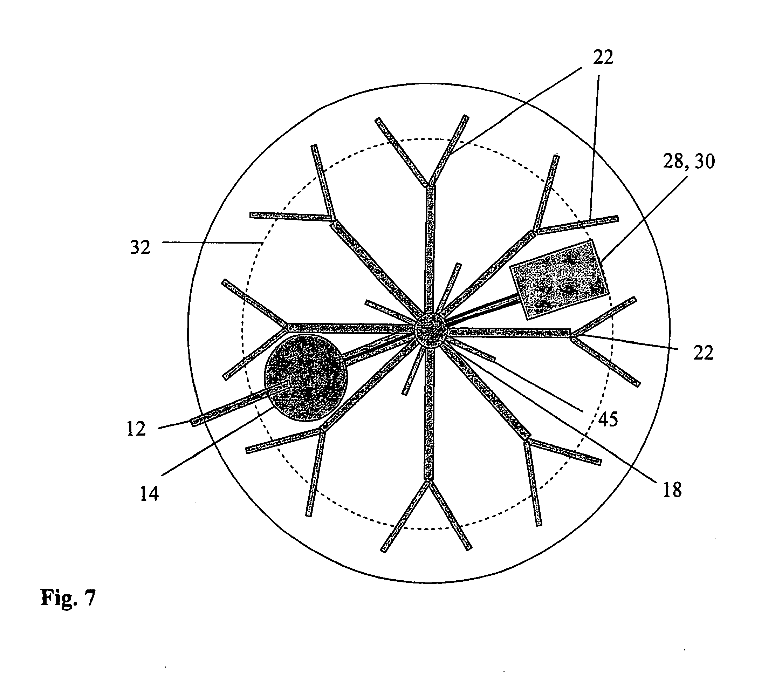

- Fig. 7: eine Variante zur Silobeschickung mit Aufteiler in Luftförderrinnen
- Fig. 8: Gradientenüberlagerung Feingut im Silo und schematische Darstellung der Feingutkonzentration durch Frischgut bzw. durch Filtergutrückführung.

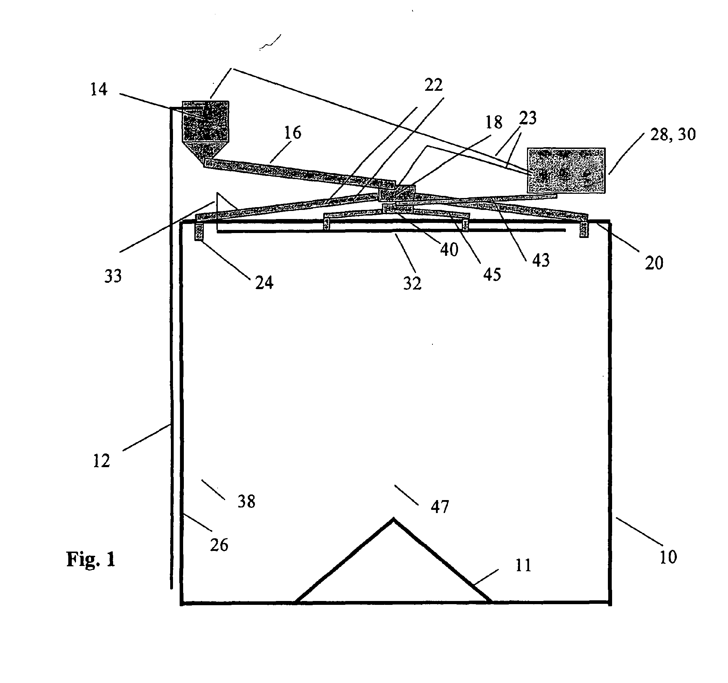

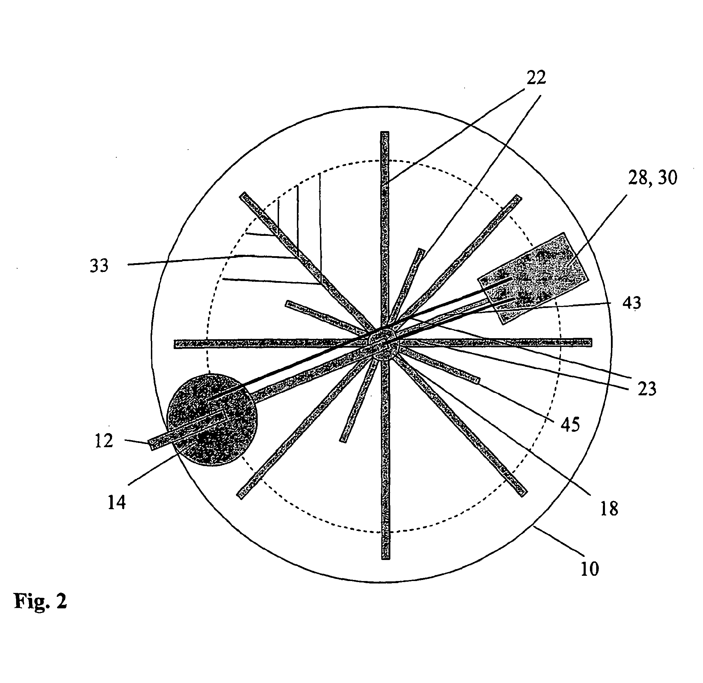

Unter Bezugnahme auf die Figuren 1 und 2 erfolgt die Beschickung des Silos 10, welches einen Siloboden 11 mit einem Entlastungskegel besitzt, von oben durch pneumatische oder mechanische Fördereinrichtungen, insbesondere die Förderleitung 12. Im Fall der pneumatischen Beschickung gelangt das Aufgabegut zunächst in ein Expansionsgefäß 14, um,die Förderluft möglichst weitgehend vom Material abzutrennen, so dass ein möglichst niedriger Lufteintrag mit dem Material von außen in das Silo 10 erfolgt. Vom Expansionsgefäß 14 gelangt das Aufgabegut über eine Zufuhr-Luftförderrinne 16 in einen zentral angeordneten Parallelverteiler 18 auf der Silodecke 20, an dem sich mehrere radial angeordnete Luftförderrinnen 22 anschließen, über die das Material an Auslaufköpfen 24 durch die Silodecke 20 in das Silo 10 fällt. Die Beschickung in Nähe der Silowand 26 mit einer Vielzahl von Abwurfstellen bzw. Auslaufköpfen 24 der Förderrinnen 22 sorgen dafür, dass in Wandnähe keine oder praktisch keine Toträume für die Luftströmung entsteht und gleichzeitig eine gleichmäßige Verteilung des Aufgabegutes im Silo 10 erfolgt. Die Zahl und Länge der Luftförderrinnen 22 richtet sich nach dem Silodurchmesser und der gewünschten gleichmäßigen Materialverteilung und der Minimierung oder Eliminierung von Toträumen. Mit steigendem Durchmesser werden mehr und längere Rinnen 22 verwendet. Die Anzahl und Länge wählt der Fachmann beliebig an.

An der Unterseite ihres Gewebes werden die Luftförderrinnen 22 mit einer geringen Fluidisierluftmenge angeströmt. Die den Rinnen 22 aufgegebene Luft wird über den Oberkasten der Rinnen 22 bzw. den Parallelverteiler 18 über einen zentralen Filter 28 abgesaugt, so dass an den Oberkästen ein Unterdruck entsteht. Die abgesaugte Luftmenge wird über die Dimensionierung des Sauggebläses 20 so eingestellt, dass ebenfalls die im Silo 10 durch das eingelagerte Material verdrängte Luftmenge und ggf. ein Teil der Silobodenbelüftung mit abgesaugt werden kann. Zusätzlich werden das Expansionsgefäß 14 und der Parallelverteiler 18 über Absaugleitungen 23 abgesaugt.

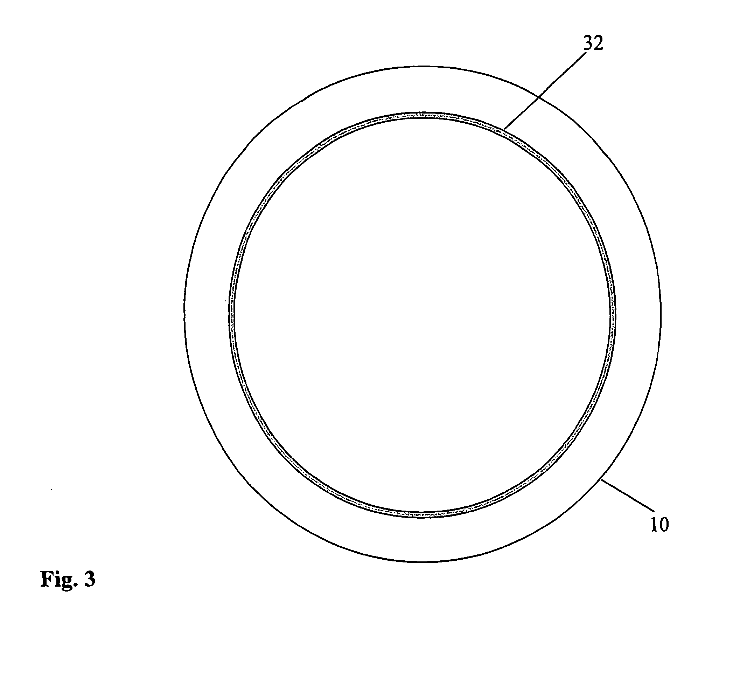

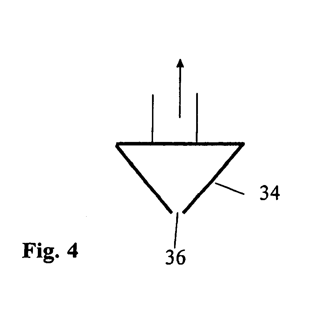

Die Absaugung der Luft im Silo 10 erfolgt unterhalb der Silodecke 20 durch eine oder mehrere ringförmige Absaugleitungen 32 (siehe Fig. 3), die in der dargestellten Ausführung über Rohre als Ansaugleitungen 33 mit den Luftförderrinnen 22 oberhalb der Silodecke 20 verbunden sind. Die Absaugleitungen 32 unterhalb der Silodecke 20 sorgen für eine gleichmäßige Absaugung der im Silo 10 verdrängten Luftmenge und somit für einen gleichmäßigen und gezielten Luftstrom im Silo 10. Unter gleichmäßiger Absaugung wird eine Absaugung des gesamten Silooberraumes auf dem Siloumfang verstanden. Eine Absaugleitung 32 besteht vorteilhafter Weise aus mehreren geraden nach unten offenen Blechprofilen 34, die miteinander verschweißt werden. Die Profile 34 weisen einen etwa 1cm großen Saugspalt 36 (siehe Fig. 4) auf sowie um etwa 45° bis 30° gegen die Vertikale geneigte Wände, über die die Luft abgesaugt wird und sich abgesetzte Staubteilchen in der Ringleitung wieder abscheiden und durch den Spalt 36 in das Silo 10 zurückfallen können. Die Weite des Spaltes 36, der Ringleitung 32 und die Zahl der Ansaugstellen bzw. Ansaugleitungen zwischen Ringleitung 32 und Luftförderrinnen 22 werden so gewählt, dass ein möglichst gleicher Widerstand über den gesamten Siloquerschnitt gegeben ist. Dabei können mehrere Ansaugleitungen 33 auf eine Rinne oder den Parallelverteiler 18 zusammengeführt werden.

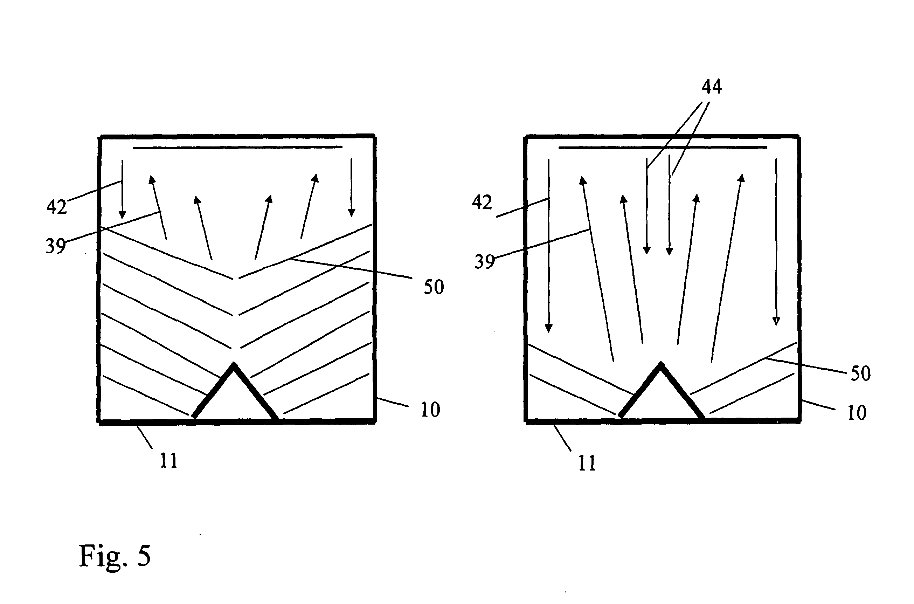

Die Wirkung der Ringleitungen 32 zur gleichmäßigen Absaugung der vom Material verdrängten Luftmenge ist am günstigsten, wenn das Silo 10 bei einem Füllstand von etwa 60-70% gefahren wird (siehe Fig. 5), was in der Praxis in der Regel angestrebt wird. Bei der Erstbefüllung wird die Wirkung der Absaugung am Anfang etwas weniger wirksam sein. Deshalb kommt hier der Silobeschickung eine besondere Bedeutung zu. Erfindungsgemäß ist die Absaugung mit der Beschickung kombiniert. An jeder Abwurfstelle des Materials wird eine Luftströmung nach unten indiziert, die eine Luftströmung nach oben an den Stellen zur Folge hat, wo kein Material fließt (siehe Fig. 5).

Um Toträume in den Siloaußensektionen 38 zu vermeiden, wird das Material 42 über eine Vielzahl von Luftförderinnen 22 bis direkt an die Silowände 26 mit einer nach unten gerichteten Strömung in Wandnähe eingetragen. Eine entgegen gerichtete Luftströmung 39 im der Mitte bzw. dem Zentrum des Silos 10 wird durch den Materialverdrängungseffekt vom Siloboden 11 bzw. der jeweiligen Materialschüttung 50 her unterstützt. Die Absaugeinrichtungen befinden sich somit zweckmä-ßigerweise von der Silomitte aus gesehen, vor den Abwurfstellen für das Material.

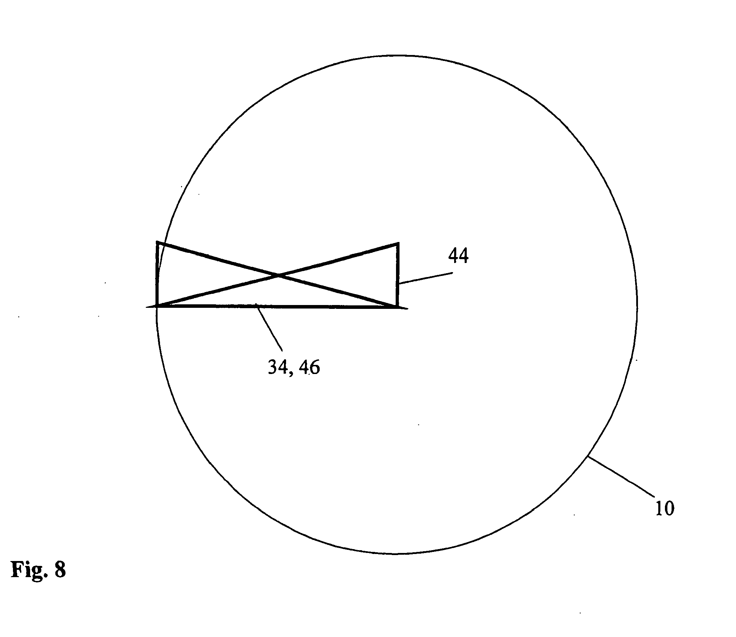

Die Aufgabe der abgesaugten Luft auf die Luftförderrinnen 22 wirkt wie eine Vorabscheidung der Staubteilchen vor dem Filter mit einer Rückführung der gröberen Staubteilchen über das Aufgabegut in das Silo 10. Der über das Filter 28 abgesaugte Feingutanteil kann gezielt über einen zweiten Parallelverteiler 40 und separate Luftförderinnen 45 in das Silo 10 zurückgeführt werden. Dabei wird das Feingut 41 zweckmä-ßigerweise nicht außen, sondern über mehrere Aufgabestellen im Zentrum aufgegeben, um für einen Ausgleich der Feingutverteilung aufgrund des Aufgabegutes (Frischgut) 42 und des rückgeführten Feingutes 44 über die Rückführleitung 43 (siehe Fig. 2) zu sorgen (siehe Fig. 8). Die Menge des über das Filter 28 geführten und separat aufgegebenen Feingutes und damit die Konzentration des Feingutes 44 in der Silomitte kann durch das Sauggebläse 30 beeinflusst werden. Um die Feingutmenge zu verändern, ist ein drehzahlgesteuertes Sauggebläse 30 vorteilhaft. Damit kann im günstigsten Fall für eine homogene Verteilung des Feingutes von außen 38 nach innen 46 gesorgt werden.

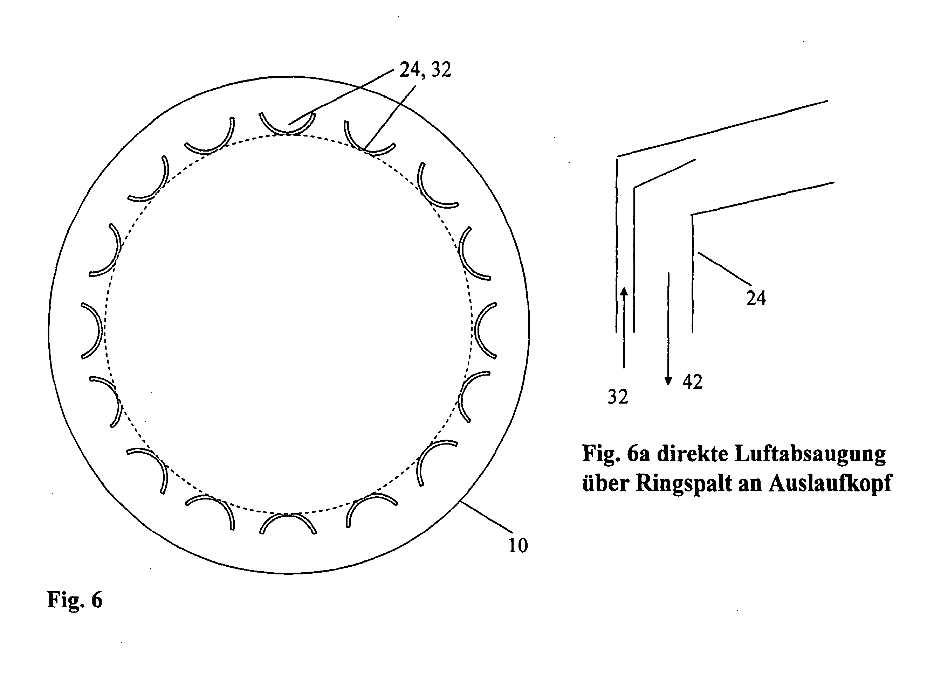

In einer Variante zu den erfindungsgemäß eingesetzten Ringleitungen 32 unterhalb der Silodecke 20, könnte die praktisch gleichmäßige Ansaugung auch durch eine Luftabsaugung unmittelbar an den Auslaufköpfen 24 für das Aufgabegut erfolgen. Die Öffnungen oder Ansaugleitungen 33 sind dabei direkt mit den Luftförderinnen 22 zur Staubabscheidung und Staubrückführung verbunden und ergeben bei einer Vielzahl von Aufgabestellen ebenfalls eine gleichmäßige Absaugung des Silooberraumes (siehe Fig. 6). Der Vorteil dieser Anordnung gegenüber einer Ringleitung 32 ist, dass keine zusätzlichen Öffnungen in der Silodecke 20 für den Ein- und Ausbau oder die Wartung der Ringleitungen 32 erforderlich sind.

### Bezugszeichenliste

- 10: Großraumsilo
- 11: Siloboden mit Entlastungskegel
- 12: Förderleitung
- 14: Expansionsgefäß
- 16: Zufuhr-Luftförderrinne
- 18: 1. Parallelverteiler
- 20: Silodecke
- 22: Luftförderrinne
- 23: Absaugleitungen zur Silobeschickung
- 24: Auslaufköpfe
- 26: Wand
- 28: Filter
- 30: Sauggebläse
- 32: Luftförderrinnen-Aufteiler
- 33: Ansaugleitungen
- 34: Profil
- 35: ringförmige Absaugleitungen
- 36: Saugschlitz
- 38: Siloaußensektion
- 39: Luftströmung, nach oben gerichtet
- 40: 2. Parallelverteiler
- 41: Feingut
- 42: Frischgut
- 43: Feingutrückführleitung
- 44: Konzentration durch Filtergut-Rückführung
- 45: Luftförderrinnen für Feingut
- 46: Konzentration durch Frischgut
- 47: Siloinnensektion
- 50: Materialschüttung

## Patentansprüche

1. Verfahren zum Befüllen eines Großraumsilos (10) mit einem fluidisierbaren Material unter Verhinderung einer Luft- oder Gasstrom-Entmischung, bei dem die Materialbeschickung über eine Förderleitung (12), Zufuhrrinne (16) und Luft- oder Gasförderrinnen (22) in den oberen Teil des Großraumsilos (10) zur Silowand (26) und nach unter zur Oberfläche des Materials über dem Siloboden (19) des Großraumsilos (10) gesteuert erfolgt,
**dadurch gekennzeichnet, dass** die Materialbeschickung mit einer gleichmäßigen und gesteuerten Luft- oder Gasabsaugung kombiniert wird, die mittels einer oder mehrerer im wesentlichen ringförmigen unmittelbar unterhalb der Silodecke (20) angeordneten Absaugleitungen (32) oder über ringförmige Saugspalte an den Materialauslaufköpfen (24) durchgeführt wird.

2. Verfahren nach Anspruch 1, **dadurch gekennzeichnet, dass** die Materialbeschickung für das Siloaufgabegut über einen ersten Parallelverteiler (18) und Luft- oder Gasförderrinnen (22) und ggf. Abzweigstellen an der Silowand (26) bzw. der Nähe der Silowand (26) durchgeführt wird.

3. Verfahren nach Anspruch 1 und 2, **dadurch gekennzeichnet, dass** das Feingut über einen zweiten Parallelverteiler (40) im Zentrum des Silos (10) oder der Nähe des Zentrums steuerbar rückgeführt wird.

4. Verfahren nach Anspruch 3, **dadurch gekennzeichnet, dass** die Feingutrückführung über das Sauggebläse (30) gesteuert wird und damit die Feingutkonzentration in der Außen- und Innensektion (38 bzw. 46) im Silo (10) ausgeglichen wird.

5. Verfahren nach Anspruch 1 bis 4, **dadurch gekennzeichnet, dass** die Absaugleitungen über die radialen Luft oder Gasförderrinnen (22) bzw. dem zweiten Verteiler (40) für die Luftförderrinnen (22) entstaubt werden.

6. Verfahren nach Anspruch 1 bis 5, **dadurch gekennzeichnet, dass** die Absaugung ringförmig direkt an den Materialbeschickungsstellen durchgeführt wird.

7. Anordnung zum Befüllen eines Großraumsilos (10) mit einem fluidisierbaren Material unter Verhinderung einer Luft- oder Gasstrom-Entmischung, mit Einrichtung zum gesteuerten Beschicken des Materials mittels einer Förderleitung (12), Zufuhrrinne (16) und Luft- oder Gasförderrinnen (22) in den oberen Teil des Großraumsilos (10) über einen ersten Parallelverteiler (18) zur Silowand (26) hinein nach unten zur Oberfläche des Materials über dem Siloboden (19) des Großraumsilos (10), **dadurch gekennzeichnet, dass** zur gleichmäßigen und gesteuerten Luft- oder Gasabsaugung eine oder mehrere im wesentlichen ringförmige Absaugleitungen (32) unterhalb der Silodecke (20) angeordnet sind oder ringförmige Saugspalte an den Materialauslaufköpfen (24) vorgesehen sind.

8. Anordnung nach Anspruch 7, **dadurch gekennzeichnet, dass** die Absaugeinrichtungen (32) einen Saugschlitz (36) umfassen.

## Claims

1. Method for filling a large capacity silo (10) with a fluidizable material whilst preventing an air or gas flow separation, in which material loading takes place in controlled manner by means of a delivery line (12), supply chute (16) and air or gas delivery chutes (22) in the upper part of the large capacity silo (10) towards silo wall (26) and downwards towards the surface of the material over the silo floor (19) of the large capacity silo (10), **characterized in that** the material loading is combined with a uniform, controlled air or gas suction, which is performed by means of one or more suction lines (32) arranged in a substantially annular manner directly below the silo roof (20) or by means of annular suction gaps on the material discharge heads (24).

2. Method according to claim 1, **characterized in that** the material loading for the silo feedstock is performed by means of a first parallel distributor (18) and air or gas delivery chutes (22) and optionally branching points on the silo wall (26) or the vicinity of silo wall (26).

3. Method according to claim 1 and 2, **characterized in that** the fine material is controllably returned via a second parallel distributor (40) in the centre of silo (10) or in the vicinity of said centre.

4. Method according to claim 3, **characterized in that** the fine material return is controlled by means of suction fan (30) and as a result the fine material concentration in the outer and inner sections (38 and 46 respectively) in silo (10) is compensated.

5. Method according to claims 1 to 4, **characterized in that** dust removal takes place in the suction lines by means of the radial air or gas delivery chutes (22) or the second distributor (40) for the air delivery chutes (22).

6. Method according to claims 1 to 5, **characterized in that** suction takes place in annular manner directly at the material loading points.

7. Arrangement for filling a large capacity silo (10) with a fluidizable material whilst preventing air or gas flow separation, with a device for the controlled loading of the material by means of a delivery line (12), supply chute (16) and air or gas delivery chutes (22) in the upper part of the large capacity silo (10) via a first parallel distributor (18) towards the silo wall (26) and downwards to the surface of the material above the silo floor (19) of the large capacity silo (10), **characterized in that** for uniform, controlled air or gas suction there are one or more substantially annular suction lines (32) below the silo roof (20) or annular suction gaps are provided on the material discharge heads (24).

8. Arrangement according to claim 7, **characterized in that** the suction devices (32) comprise a suction slot (36).

## Revendications

1. Procédé pour remplir un silo de grande capacité (10) avec un matériau fluidisable en empêchant une dissociation de flux d'air ou de flux de gaz, dans lequel l'alimentation en matériau s'effectue de façon commandée par une conduite de transport (12), une goulotte d'arrivée (16) et des goulottes de transport d'air ou de gaz (22) dans la partie supérieure du silo de grande capacité (10) en direction de la paroi du silo (26) et vers le bas par rapport à la surface du matériau au-dessus du fond de silo (19) du silo de grande capacité (10), **caractérisé en ce que** l'alimentation en matériau est combinée avec une aspiration d'air ou de gaz régulière et contrôlée, qui est effectuée au moyen d'une ou de plusieurs conduites d'aspiration (32) de forme sensiblement annulaire et disposées directement au-dessous du plafond du silo (20) ou au moyen de fentes d'aspiration annulaires sur les têtes de sortie de matériau (24).

2. Procédé selon la revendication 1, **caractérisé en ce que** l'alimentation en matériau pour le produit d'alimentation de silo est effectuée au moyen d'un premier répartiteur parallèle (18) et de goulottes de transport d'air ou de gaz (22) et éventuellement de points de déviation sur la paroi du silo (26) et/ou à proximité de la paroi du silo (26).

3. Procédé selon les revendications 1 et 2, **caractérisé en ce que** le produit fin est recyclé de façon contrôlable par un second répartiteur parallèle (40) situé au centre du silo (10) ou à proximité du centre.

4. Procédé selon la revendication 3, **caractérisé en ce que** le recyclage du produit fin est contrôlé par la soufflerie d'aspiration (30) et la concentration du produit fin dans la section extérieure et la section intérieure (38 et 46) dans le silo (10) est ainsi équilibrée.

5. Procédé selon les revendications 1 à 4, **caractérisé en ce que** les conduites d'aspiration sont dépoussiérées au moyen des goulottes de transport d'air ou de gaz (22) radiales et/ou du second répartiteur (40) pour les goulottes de transport d'air (22).

6. Procédé selon les revendications 1 à 5, **caractérisé en ce que** l'aspiration est effectuée à la façon d'un anneau directement sur les points d'alimentation en matériau.

7. Agencement pour le remplissage d'un silo de grande capacité (10) avec un matériau fluidisable en empêchant une dissociation du flux d'air ou du flux de gaz, avec un dispositif pour l'alimentation contrôlée en matériau au moyen d'une conduite de transport (12), d'une goulotte d'arrivée (16) et de goulottes de transport d'air ou de gaz (22) dans la partie supérieure du silo de grande capacité (10) au moyen d'un premier répartiteur parallèle (18) en direction de l'intérieur de la paroi de silo (26) vers le bas par rapport à la surface du matériau au-dessus du fond du silo (19) du silo de grande capacité (10), **caractérisé en ce que**, pour une aspiration d'air ou de gaz régulière et contrôlée, une ou plusieurs conduites d'aspiration (32) de forme sensiblement annulaire sont disposées au-dessous du plafond du silo (20) ou bien des fentes d'aspiration annulaires sont prévues sur les têtes de sortie de matériau (24).

8. Agencement selon la revendication 7, **caractérisé en ce que** les dispositifs d'aspiration (32) comprennent une fente d'aspiration (36).
